# EUROPEAN PATENT SPECIFICATION

(11) **EP 4 388 138 B1**
(45) Date of publication and mention of the grant of the patent: **28.05.2025**
(21) Application number: 22761640.6
(22) Date of filing: 19.08.2022
(51) Int. Cl.: C14C 3/18, C14C 3/20, C14C 3/06, C08L 61/00, C08G 16/02

(54) **CONDENSATES, A PROCESS FOR THEIR MANUFACTURE AND THEIR USE AS RE-TANNING AGENTS**
KONDENSATE, EIN VERFAHREN ZU IHRER HERSTELLUNG UND IHRE VERWENDUNG ALS NACHGERBSTOFFE
PRODUITS DE CONDENSATION, LEUR PROCÉDÉ DE PRÉPARATION ET LEUR UTILISATION COMME AGENTS DE RETANNAGE

(30) Priority: 20.08.2021 NL 2029004
(43) Date of publication of application: 26.06.2024
(73) Proprietor: Stahl International B.V., 5145 PE Waalwijk (NL)
(72) Inventor: AMMENN, Jochen, 69207 Sandhausen (DE)
(74) Representative: V.O.
(86) International application number: PCT/NL2022/050475
(87) International publication number: WO 2023/022595

(56) References cited:
- LIAO X ET AL: "Preparation of formaldehyde-free retanning agent for leather, by subjecting melamine and furfural to nucleophilic addition reaction to obtain prepolymer containing hydroxyl group and furan ring, sulfonating prepolymer and etherifying", WPI / 2017 CLARIVATE ANALYTICS,, vol. 2018, no. 76, 28 September 2018 (2018-09-28), XP002806032
- LI Q ET AL: "Ferulic acid and ferulate preparation method involves using vanillin and ethyl malonate compounds as synthetic raw material, and reacting using condensation, saponification and decarboxylation", WPI / 2017 CLARIVATE ANALYTICS,, vol. 2005, no. 18, 10 November 2004 (2004-11-10), XP002806035
- WANG G ET AL: "New amino-terminated aliphatic hyperbranched polymer useful in preparing leather retanning agent", WPI / 2017 CLARIVATE ANALYTICS,, vol. 2012, no. 82, 18 July 2012 (2012-07-18), XP002806033
- "Chemical preservation of skins - by de-pickling, activation in formalin and malonic acid, re-pickling in formic acid, tanning in titanyl ammonium sulphate and neutralising", WPI / 2017 CLARIVATE ANALYTICS,, vol. 1989, no. 38, 16 February 1989 (1989-02-16), XP002806034
- DATABASE WPI Week 201876, Derwent World Patents Index; AN 2018-79492S, XP002806032
- DATABASE WPI Week 201282, Derwent World Patents Index; AN 2012-M67641, XP002806033
- DATABASE WPI Week 198938, Derwent World Patents Index; AN 1989-272472, XP002806034
- DATABASE WPI Week 200518, Derwent World Patents Index; AN 2005-164020, XP002806035

## Description

The present invention relates to condensates, to a process for their manufacture, and to their use as re-tanning agents in the leather manufacturing process. The invention is set out in the appended set of claims.

Leather is a durable, flexible material created via the tanning of animal rawhide and skin. The leather manufacturing process is divided into three fundamental sub-processes: preparatory stages, tanning and crusting.

The present invention relates to the sub-process of tanning, especially the re-tanning part thereof.

In the preparatory stages, hide or skin is prepared for tanning. After trimming, animal skin is soaked to remove salts and other solids, while restoring moisture when the skin was first dried. Then, the flesh side of the wet skin is scraped to remove any remaining traces of flesh or fat, and the skin is optionally dehaired. After an optional bating and pickling step, the skins are subjected to tanning. Other potential steps that may be part of the preparatory stages include preservation, liming, splitting, reliming, deliming, degreasing, frizzing, bleaching and depickling.

Tanning is the process of preserving the skins by converting the protein, via crosslinking the collagen fibres, of the raw hide or skin into a stable material that does not putrefy and provides tanned leathers with satisfactory properties, such as high shrinkage temperatures T_{S}, suppleness and suitability for subsequent processing such as neutralization, re-tanning, fatliquoring, dyeing, finishing.

Tanning is carried out by using either vegetable chemicals, using tannin and other ingredients derived from vegetable matter such as the Tara fruit or the bark of certain trees, such as the Mimosa tree, by the use of chromium salts (giving so-called wet-blue leather, with chromium sulphate as most frequently used chromium salt), by the use of aldehydes (resulting in wet-white leather), by the use of organic reactive tanning agent (resulting in wet-white leather), by use of synthetic tannins (syntans), or other conventional techniques. The product prepared in this sub-process is called "tanned leather".

Primary tanning is not always sufficient to obtain the desired characteristics specified by the customer. It is therefore re-tanned. The tannins used for this process are different from those used in the primary tanning stage. This process is called combination tanning. Re-tanning affects the feel of the leather, the dyeability, fullness of the leather, the fineness of the grain and the stability of grain and other factors such as light fastness, to suit characteristics required for the end product - whether for automotive or aviation seating, footwear, garments or bags and leather goods. Re-tanning includes dyeing to give colour and fatliquoring to add softness, fullness and touch. Once re-tannage is complete, the leather is known as "crust".

Vegetable tanning agents were the first tanning agents. They are now mostly used in the re-tanning, because of the nowadays wide acceptance of chromium sulphate or glutaraldehyde as tanning agents. Common vegetable tanning agents are Mimosa, obtained from the bark of the Mimosa tree, and Tara, obtained from the fruits of the Tara tree. They can impose softness and limited filling of the collagen structures to leathers (Hans Herfeld, "Library of Leather; Volume 3: Tanning Agents, Tanning and Retanning", Frankfurt 1985, page 44). Usually, vegetable tanning agents lack fastness properties, such as resistance to light or resistance to heat induced ageing.

The term syntan refers to the range of synthetic tanning agents. The first syntans were made by condensation of phenol sulfonic acid and formaldehyde (E. Stiasny, 1911, Austrian Patent Nr. 58405). While these syntans were initially used as dispersers and auxiliaries for vegetable tannins, they could be applied as tanning agents replacing some or even all vegetable tannins after further development of their chemistry. US 1,8418,40 describes the incorporation of urea into the polycondensation of phenol sulfonic acid and formaldehyde, as depicted in Scheme 1, by which such a further development was achieved, enabling to obtain leathers with increased technical requirements such as fastness properties concerning light or heat induced ageing.

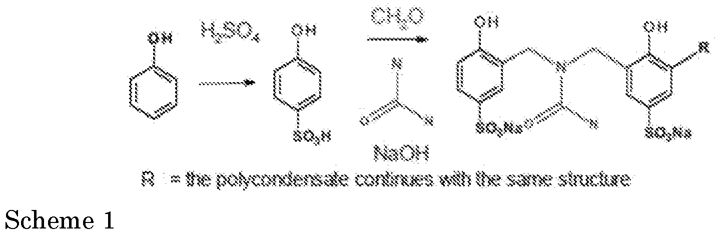

Because of the wide acceptance of chromium sulphate or glutaraldehyde as tanning agents, syntans are now mainly used in the re-tanning process, where they help to structure and fill the crosslinked collagen fibres. Unfortunately, syntans contain a residual amount of free formaldehyde, which means that they should be handled and used with care due to safety reasons.

In many applications syntans and vegetable tannins are applied together, since the performance of vegetable tannins alone is considered insufficient. The syntans generally have higher fastness properties and have to provide dispersing properties in order to support the even distribution of vegetable tannins and other leather chemicals as fillers, dyes, and fatliquors (F. W. Guthke et al., DE 1142173, 1959).

Given the fact that syntans are still made from oil based and toxic phenol and formaldehyde, the search is ongoing for re-tanning agents made from less toxic starting materials, and preferably renewable starting materials, that can substitute syntans. There continues to be a need for chemical products made from biobased materials instead of petroleum-based materials, and these bio-based materials are thus called renewable materials. There is currently a big driving force for companies, and the chemical industry in particular, for corporate responsibility and the use of sustainable or renewable sources of raw materials. It is of particular interest to use biobased raw materials that do not compete with usage of those biobased raw materials as food source, and hence the usage of biobased waste streams is particularly advantageous.

CN 1085688302 discloses a formaldehyde-free retanning agent which is prepared from the reaction of melamine and furfural as aromatic aldehyde followed by sulfonation and etherification with alkanol.

The Knoevenagel condensation is the reaction of CH-acidic nucleophile like a malonic ester (R¹ = alkyl) with aldehydes (R² = alkyl, aryl; R³ = H) or ketones (R² and R³ = alkyl or aryl) resulting in alpha,beta-unsaturated compounds (E. Knoevenagel, F. Albert, Chem. Ber., 1904, 37, 4476 - 4482), as depicted in Scheme 2.

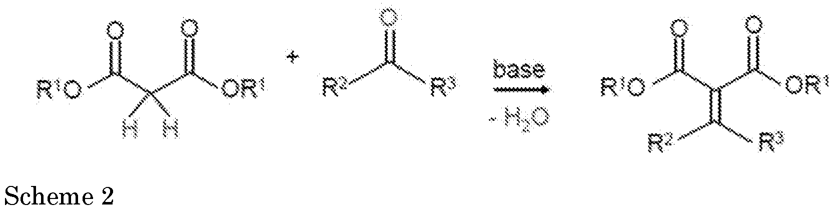

Knoevenagel condensates of malonic esters with aromatic aldehydes have been described in US 6,602,515 as photo stable organic sunscreen compounds and in WO 2002072530 as surface modifiers for polymers.

Olefins can be reacted with sodium bisulfite in a free radical mechanism to give sodium sulfonates, as described in J. Org Chem. 1938, Vol 27, 2853 by M.S. Kharasch, E.M. May and F.R. Mayo. This reaction will be further called a sulphitation reaction and the products formed therewith will be called the sulphited products.

The present invention provides a product that can be used as re-tanning agent in the leather process that is free of formaldehyde and that provides good re-tanning behaviour.

It was found that Knoevenagel condensates could be converted into water soluble sulphited compounds suitable for aqueous applications, as depicted in Scheme 3. Surprisingly, it was found that the sulphited condensates resulting from Knoevenagel condensation of malonates with aromatic aldehydes can be used as re-tanning agents and are thus able to replace syntans in re-tanning of leather.

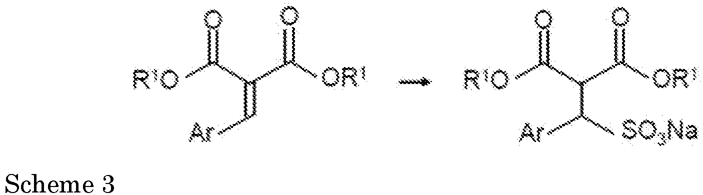

In addition, it was found that polyesters obtained after transesterification of the Knoevenagel products made from malonic esters and aromatic aldehydes could also be sulphited to obtain water soluble products, as depicted in Scheme 4, to make them suitable for aqueous applications.

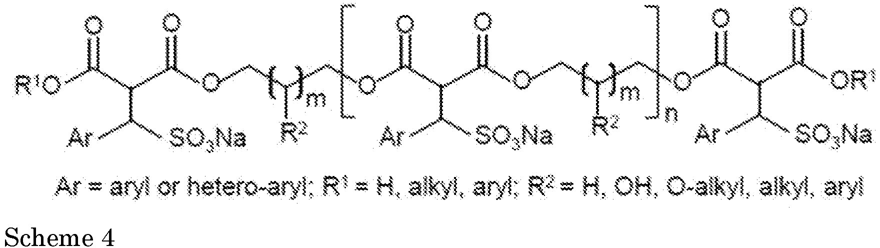

The object of the present invention is to provide a product that can be used as re-tanning agent in the leather process that is free of formaldehyde and that provides good re-tanning behaviour and that is preferably made from partly renewable raw materials.

In a first aspect, the present invention relates to a product obtained by condensation of a malonic ester with aromatic aldehydes and subsequent sulphitation.

In a second aspect, the present invention relates to a product obtained by condensation of a malonic ester with aromatic aldehydes, subsequent transesterification with polyol, and subsequent sulphitation.

In a third aspect, the present invention relates to the use of the present products as re-tanning agent in the leather process.

The present invention provides a process for preparing novel compounds comprising the steps of
i) Condensation of malonic esters with aromatic aldehydes;
ii) Optionally, transesterification of the condensates obtained in step i) with polyol and
iii) Sulphitation of the product obtained in step i) or of the transesterified condensate obtained in step ii).

The Knoevenagel reaction of the present invention (step i) is done using aromatic aldehydes, which may include hetero-aromatic aldehydes, and preferably using renewable aromatic aldehydes, such as vanillin, furfural, 5-hydroxymethyl furfural, or 2,5-diformylfuran, in order to move away from oil based raw materials. Vanillin can be obtained from lignin, a waste product from the paper industry, via enzymatic degradation (O. Suprano, A. Covington, and C. Evan, J. Chem. Technol. Biotechnol. 2005, 80, 44 - 49) or in an electrochemical process (S. R. Waldvogel, M. Breiner, Nachrichten aus der Chemie 2020, 68, 42 - 44). Furfural, 5-hydroxymethyl furfural and 2,5-diformylfuran can be made from the degradation of xylose or lignocellulosic biomass (Huiling Li, Junli Ren, Linjie Zhong, Runcang Sun, Lei Liang, Bioresour. Technol. 2015, 176, 242 - 248; and Thomas De Dios Miguel, Nam Duc Vu, Marc Lemaire, Nicolas Duguet, ChemSusChem. 2021, 14, 379-386). Xylose can be obtained from hemicellulose, another side stream of the paper industry.

The Knoevenagel reaction of the present invention (step i) is done using a malonic ester, preferably a dialkyl malonic ester. Examples are given by the general formula R¹OC(O)-CH₂-C(O)OR², wherein R¹ and R² are independently alkyl groups with preferably 1 to 10 carbon atoms for example methyl, ethyl, propyl, isopropyl, butyl, isobutyl, sec-butyl, tert-butyl, pentyl, isopentyl, neopentyl, hexyl, heptyl, octyl, nonyl, decyl, an allyl group, a methallyl group, an alkenyl group with preferably 1 to 10 carbon atoms such as 2-butenyl (crotyl), 3-butenyl, 2-pentenyl, aryl groups and a particularly preferred example is diethyl malonic ester where R¹=R²=ethyl.

The Knoevenagel reaction of the present invention can be carried out under the normal reaction conditions known for the Koevenagel condensation reaction as also described by E. Knoevenagel and F. Albert, in Chem. Ber., 1904, 37, 4476 - 4482).

The sulphitation reaction of the present invention (step iii) is reaction of a carbon-carbon double bond, an olefinic bond, into a sulfonate, using NaHCO₃ and sodium bisulfite or sodium meta bisulfite (Na₂S₂O₅) for several hours at elevated temperatures, after which effectively a hydrogen and a SO₃Na are attached to the what was previously the C=C double bond, as depicted in Scheme 3. This reaction is generally executed at a temperature between 50°C and 120°C, preferably between 60°C and 100°C and most preferably between 70°C and 90°C. The reaction is executed for some duration, which is dependent on the reaction temperature and preferably the reaction duration is between 1 and 5 hours, most preferably between 2 and 4 hours.

The sulphitation reaction of the present invention can be carried out under the reaction conditions as described in J. Org Chem. 1938, Vol 27, 2853 by M.S. Kharasch, E.M. May and F.R. Mayo.

The Knoevenagel polyester condensates synthesized from a malonic ester and aromatic aldehyde in the step i) can also optionally first be trans-esterified with polyols (step ii) and subsequently sulphited (step iii). The polyester structure can be confirmed via proton nuclear magnetic resonance spectroscopy and via gel permeation chromatography.

The polyols used for the trans-esterification (step ii) can be any component that contains two or more hydroxyl groups, or a combination of such components, such as a monomeric diol, a monomeric triol, or a polymeric diol or a polymeric triol, or a combination thereof. Examples of monomeric polyols include ethylene glycol, diethylene glycol, triethylene glycol, tetraethylene glycol, bis (hydroxyethyl) terephthalate, neopentylglycol, trimethylol propane, cyclohexane dimethanol, furan dimethanol, glycerol, 1,4-butanediol, 1,3-butane diol, 1,5-pentane diol, 1,6-hexane diol, 1,8-octane diol. Besides monomeric polyols, also polymeric polyols may be used, such as polyester polyols, polyesteramide polyols, polyether polyols, polythioether polyols, polycarbonate polyols, polyacetal polyols, polyolefin polyols or polysiloxane polyols or mixtures thereof.

The condensates obtained by the present process can be applied on leather, such as via an industry standard procedure, for re-tanning. Surprisingly, it was found that leathers treated with sulphited Knoevenagel condensates of malonates with aromatic aldehydes and their polyesters, preferably made with partially renewable components, had similar or better properties on leather than syntans or vegetable tannins have, concerning softness, fullness, and lightfastness, while creating no rest monomeric phenol or formaldehyde problems. An analysis of toxic rest monomeric formaldehyde is actually not even required for these novel condensates, because none of the ingredients contains or releases formaldehyde. These novel condensates represent a novel non-toxic, partially renewable alternative to oil based phenol formaldehyde condensates in the leather industry.

An industry standard procedure for re-tanning comprises treating a tanned leather, such as wet blue of wet white, with water, sodium formiate and sodium bicarbonate for a period of time resulting in a float with a pH of below neutral, after which the re-tanning agent is added followed by further turning of the tanning drum for a certain period of time, followed by discharging the float and washing with water. Afterwards the leather is dried, such as by hang drying at room temperature without vacuum. The product of the present invention is generally added as a re-tanning agent in an amount of between 2% and 15%, and preferably in an amount of between 4% and 12%, and most preferably in an amount of between 6% and 10%, wherein the percentages refer to the weight percentage of the non-volatile part of the product of the present invention compared to the weight of the leather.

The softness of leathers can be quantified according to ISO 17235. In this measurement, a steel cylinder of defined mass is pressed with a defined speed into a framed piece of leather and the resulting area increase of the leather is measured. Larger numbers indicate bigger area increase indicating more softness of the leathers.

The lightfastness of leather can be determined according to ISO 105-B02, in, for example, a sun tester. Re-tanned leathers are exposed to light for usually 72 hours. The resulting yellowing can be quantified in a spectral photometer. Yellowing is a common weakness of leathers tanned or re-tanned with replacement syntans, as is, for example, described by J. Ammenn, et al. in Journal of the American Leather Chemists Association, 2015, Volume 110, pages 349 - 354.

Syntans are made from phenol and formaldehyde and as a consequence they can release formaldehyde. A rest monomer analysis for formaldehyde like ISO 27587 is widely applied in the leather industry. Residual phenol can be analyzed with ISO 18218-1 in parallel to alkylphenols. Advantageously, the novel condensates of the present invention are free of formaldehyde and phenol.

Fullness of re-tanned leathers is dominantly determined via haptics.

The products of the present invention can be used to prepare leathers for all applications, for example shoe, furniture, car, clothing and bag leathers.

Any kind of leather which is conventionally treated is suitable to be treated by using a product of the present invention, particularly grain leather (e.g. nappa from sheep, goat or cow and box-leather from calf or cow), suede leather (e.g. velours from sheep, goat or calf and hunting leather), split velours (e.g. from cow or calf skin), buckskin and nubuck leather; further also woollen skins and furs (e.g. fur-bearing suede leather).

The leathers can be of various thicknesses, such as from 0.5 mm to 8 mm, thus, thin leathers, are suitable for garment leather or glove-leather (nappa); leather of medium thickness, is suitable for shoe upper leather, and handbags, or also thick leathers, for shoe-sole leather, furniture leather, leather for suitcases, for belts and for sport articles; hair-bearing leathers and furs may also be used.

The leathers obtained by treating with the product of the present invention can subsequently be further processed, as is customary in the leather industry, by any of the processes of bleaching, coloring, dyeing, fatliquoring, setting to dry, conditioning, staking, milling, tumbling, buffing, pressing, embossing, ironing, finishing with a coating.

The present invention will be further elaborated by the following non-limiting working examples.

### Examples

The starting materials used in these examples are commercially available from laboratory chemicals suppliers such as Merck, Fisher-Scientific and Sigma-Aldrich.

### Intermediate 1, diethyl 3-methoxy-4-hydroxy-benzildene malonate, was synthesized according to E. Knoevenagel, F. Albert, Chem. Ber. 1904, 37, 4476 - 4482.

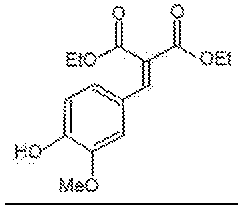

In a 250 mL 3-neck flask with mechanical stirrer and a reflux condenser 100 g vanillin (M=152,14 g/mol, n = 0,658 mol) and 110 g di-ethyl-malonate (M = 160,17 g/mol, n = 0,687 mol) were heated to 80°C and treated with 1,1 g piperidine (M= 85,15 g/mol, n = 0,011 mol). Heating was continued for 5 h. The reaction mixture was allowed to cool to ambient temperature and was partially crystallized within 3 days. The mother liquor on top of the crystals was de-canned off. 172 g of yellowish crystals remained: 89% yield.

IR: 3480 (OH), 1730, (C=O), 1681 and 1585 (C-H) cm-1.

1H-NMR (400 MHz, DMSO-d6): 1.20 (t, J = 5 Hz, 6H, CH3), 3,73 (s, 3H, OCH3), 4.18 (q, J = 5 Hz, 2H, CH2), 4.27 (q, J = 5 Hz, 2H, CH2), 6.83 (d, J = 6 Hz, 1H, 5-H), 6.99 (dd, J= 6 Hz, J = 1 Hz, 1H, 6-H), 7.06 (d, J = 1 Hz, 1H, 2-H), 7.58 (s, 1H, C=CH), 9.85 (s, 1H, OH).
Melting point: 101°C
An aliquot was re-crystallized from ethanol: melting point: 107°C (Lit.: melting point = 108°C; E. Knoevenagel, F. Albert, Chem. Ber. 1904, 37, 4476 - 4482).

Measured solubility: 1 g of dried material was stirred and 10 mL water: dispersion, no solution. Product insoluble in water.

### Example 1: 1,3-Diethyl 2-[(3-methoxy-4-hydroxy-phenyl)-sulfomethyl]- malonate sodium salt

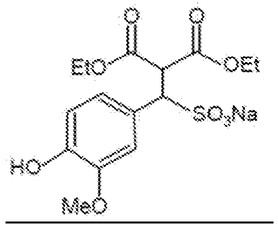

In a 250 mL 3-neck flask with mechanical stirrer and a reflux condenser 24 g diethyl 3-methoxy-4-hydroxy-benzildene malonate (Intermediate 1) (M=294,11 g/mol, n = 0,083 mol) were suspended in 100 mL water and treated with 1,38 g NaHCO₃ (M= 84,01 g/mol, n = 0,016 mol). The pH was determined to be 7.3. 7,74 g Sodium meta bisulfite (M= 190, 11 g/mol, n = 0,041 mol) was added and the suspension was warmed to reflux for 1 h. After 40 minutes the suspension had turned into solution: pH = 8,5. The solution was acidified with 2 g of 30% concentrated sulphuric acid until pH = 4, resulting in 130 g weak yellow solution. Precipitation after 24 hours at room temperature afforded a white suspension.

Solubility check: 4 g of the white suspension were dried. The resulting solid was dissolved in 10 mL water: complete water solubility.

1H-NMR (400 MHz, D2O): 0.75 (t, J = 5 Hz, 3H, CH3), 1.18 (t, J = 5 Hz, 3H, CH3), 3,75 (s, 3H, OCH3), 3.80 (q, J = 5 Hz, 2H, CH2), 4.15 (q, J = 5 Hz, 2H, CH2), 4.20 (d, J = 8 Hz, 1H, CH), 4.55 (d, J = 8 Hz, 1H, CH), 6.75 (d, J = 6 Hz, 1H, 5-H), 6.80 (dd, J= 6 Hz, J = 1 Hz, 1H, 6-H), 6.95 (d, J = 1 Hz, 1H, 2-H).

### Intermediate 2: 1,6-Hexandiol-di-[3-ethyl-2-(4-hydroxy-3-methoxy)benzylidene]-malonate (Dimeric ester of intermediate 1 with 1,6-hexandiol)

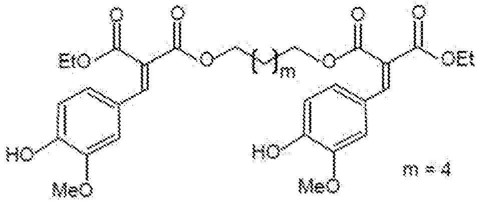

In a 50 mL 1-neck flask with mechanical stirrer and distillation apparatus 14,7 g diethyl 3-methoxy-4-hydroxy-benzildene malonate (Intermediate 1) (M = 294,11 g/mol; 50 mmol = 1 eq.) were treated with 2,95 g 1,6-hexandiol (M= 118,17 g/ mol; 25 mmol = 0,5 eq.) and heated to 100 to 120 °C until melting of the reaction mixture. 0,4 g dibutyl tin laureate (DBTL) were added and heating was raised to 140°C for 2 h. 1,6 g ethanol was distilled off. Theoretical yield: 2,3 g ethanol (50 mmol) should be distilled off.

1H-NMR (400 MHz, CDCl3): 1.20 - 1.82 (m, 14H, CH2 + CH3), 3.55 - 3.72 (m, 2H, CH2), 3.82 (s, 6H, OCH3), 4.10 - 4.38 (m, 4H, CH2), 6,08 (s, 2H, 5-H), 6.85 (d, J = 8 Hz, 2H,6-H ), 7.08 (dd, J = 8, Hz, J = 6 Hz, 2-H), 7.62 (d, J = 6 Hz, 2H, C=CH).

### Example 2: 1,6-Hexandiol-di-[1-ethyl 2-(3-hydroxy-4-methoxyphenyl)-sulfomethyl]-propanedioate bis sodium salt (Sulphited ester of intermediate 2)

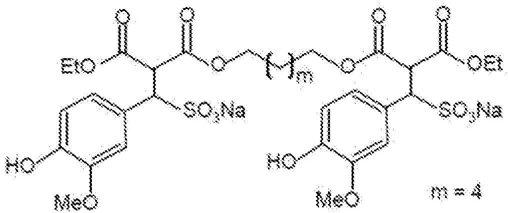

In a 50 mL 1-neck flask 7 g 1,6-Hexandiol-di-[3-ethyl-2-(4-hydroxy-3-methoxy)benzylidene]-malonate (Intermediate 2) (25 mmol) were suspended in 20 mL warm water. The suspension was treated with 230 mg NaHCO₃ (2,7 mmol = 0,2 eq.). pH = 7,3. 4,9 g Na₂S₂O₅ (25, mmol = 1,625 eq.) were added and the suspension was warmed to 80°C for 3 h and turned into a solution after one hour: pH = 8,6. 32 g of a brown turbid solution remained (37% solids measured).

A sample of 1 g was acidified with 10% sulphuric acid until pH 3-4. The solution remained. No solids were observed initially. After one day the solution had turned into a paste.

1H-NMR (400 MHz, D2O): 0.80 ppm, (t, J = 7 Hz, 6H, CH3), 0.82 - 1.64 (m, 8H, CH2), 3.80 (s, 6H, OMe), 3.82 - 3.90 (m, 4H, OCH2), 4.18 - 4.24 (m, 4H, OCH2), 4,30 (d, J = 11 Hz, 2H, 2-H ) 4,60 (d, J = 11 Hz, 2H, 3-H), 6.80 - 6.90 (m, 4H, 5-H, 6-H), 7.00 (d, J = 1 Hz, 1H, 2-H).

### Intermediate 3: Polyester resulting from esterification of intermediate 1 with 0,75 eq. 1,6-hexandiol (Tetrameric ester of intermediate 1 with 1,6-hexandiol)

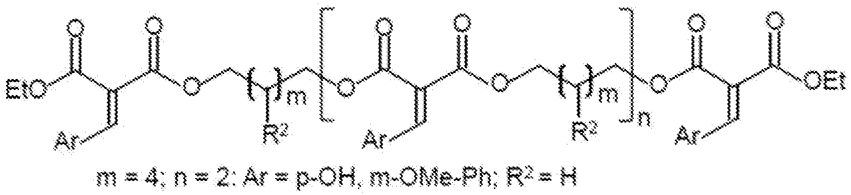

In a 100 mL 1-neck flask with mechanical stirrer and distillation apparatus 30 g Knoevenagel product Intermediate 1 (M = 294 g/mol; 102 mmol) were melted and treated with 9,0 g 1,6-hexandiol ( M = 118,12 g/mol; 76 mmol = 0,75 eq.) and 1,2 g dibutyl tin laureate (DBTL) and heated to 140°C for 2 h. After 90 minutes heating 5 g of a colourless liquid had been distilled off. Theoretical yield of ethanol: 7,0 g ethanol (M = 46 g/mol; 152 mmol; 1,5 eq.). A dark oil remained: 33 g.

1H-NMR (400 MHz, CDCl3): 1.20 - 1.82 (m, 30H, CH2 + CH3), 3,35 - 3,80 (m, 8H, OCH2), 3.82 (s, 12H, OCH3), 3.92 - 4.38 (m, 8H, OCH2), 6.20 - 6.60 (mbr, 4H, OH), 6,80 - 7.60 (m, 16H, aromatic and olefinic H).

### Example 3: Sulphited Polyester (Sulphited polyester of intermediate 3)

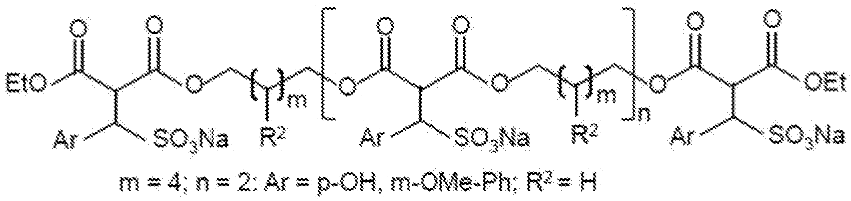

In a 50 mL 1-neck flask 7 g Intermediate 3 (M = 1041 g/mol; 6,7 mmol) were suspended in 20 mL warm water. The suspension was treated with 230 mg NaHCO₃ (1,3 mmol = 0,2 eq.): pH = 7,3. 2,3 g Na₂S₂O₅ (12,1 mmol) were added and the suspension was warmed to 80°C for 3 h and turned into a solution after one hour: pH = 8,6. 29 g of a brown turbid solution remained. (32% solids measured).

1H-NMR (400 MHz, D2O): 0.75 ppm, (t, J = 7 Hz, 6H, CH3), 0.78 - 1.59 (m, 24H, CH2), 3.75 (s, 12H, OMe), 3.77 - 4.20 (m, 12H, C=O-CH-C=O, OCH2), 4.25 - 4.30 (m, 12H, OCH2, benzylic H), 6.75 - 6.80 (m, 8H, 5-H, 6-H), 6.88 - 6.97 (m, 4H, 2-H).

### Intermediate 4: Diethyl (2-furanyl)methylene malonate

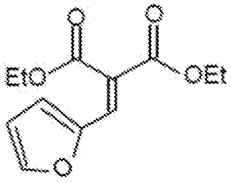

In a 100 mL 1-neck flask with reflux condenser 25 g furfural (M = 96,08 g/mol; 260 mmol) and 43,6 g Diethylmalonate (M = 160,11 g/mol; 0,271 mol = 1,045 eq.) were mixed and treated with 400 mgs piperidine. The reaction mixture was heated to 80°C and stirred for 4 h at 80°C resulting in 65 g of a red solution. The solution was allowed to cool to room temperature resulting in 65 g red solution.

1H-NMR (400 MHz, CDCl3): 1.24 (t, J = 6 Hz, 3H, CH3), 1.33 (t, J = 6 Hz, 3H, CH3), 4.23 (q, J = 6 Hz, 2H, CH2), 4.37 (q, J = 6 Hz, 2H, CH2), 6.43 (dd, J = 2 Hz, J = 1 Hz, 1H, 3-H), 6.72 (dd, J = 2 Hz, J = 1 Hz, 1 H, 4-H), 7.40 (s, 1H, C=CH), 7.46 (d, J = 1 Hz, 1H, 2-H).

### Example 4: 1,3-Diethyl-2-[2-furanyl)sulfomethyl]-propanedioate sodium salt

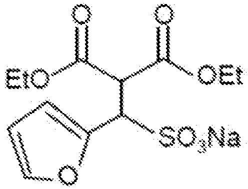

In a 250 mL 1-neck flask 21 g Diethyl (2-furanyl)methylene malonate (Intermediate 4) ( M = 238,24 g/mol, 88,1 mmol) were suspended in 100 mL warm water. The suspension was treated with 1,38 g NaHCO³ (16,4 mmol = 0,2 eq.): pH = 7,3. 8,79 g Na₂S₂O₅ (M = 190,01 g/mol, 46 mmol) were added and the suspension was warmed to 100°C for 1 h. After 40 minutes the suspension had turned into a light red solution, pH = 8,5. The solution was acidified with 2 g 30% concentrated sulphuric acid until pH = ~ 4, resulting in 130 g weak yellow solution.

1H-NMR (400 MHz, D2O): 0.95 (t, J = 6 Hz, 3H, CH3), 1.20 (t, J = 6 Hz, 3H, CH3), 3.95 (q, J = 6 Hz, 2H, CH2), 4.20 (q, J = 6 Hz, 2H, CH2), 4.24 (d, J = 7 Hz, 1H, C-H), 4.82 (d, J = 7 Hz, 1H, C-H), 6.38-6.42 (m, 2H, 3-H, 4-H), 7,42 (d, J = 2 Hz, 1H, 5-H).

### Intermediate 5: Polyester resulting from esterification of intermediate 1 with 0,8 eq. 1,5-pentandiol (Pentameric ester of intermediate 1 with 1,5-pentandiol)

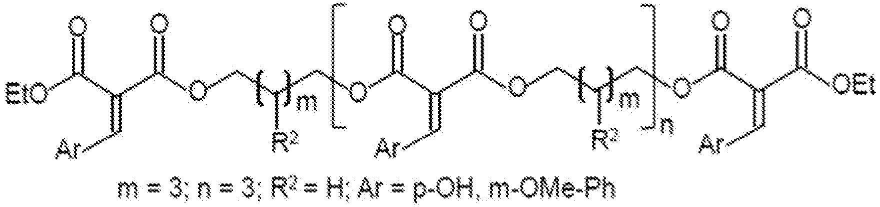

In a 100 mL 1-neck flask with mechanical stirrer and distillation apparatus 30 g intermediate 1 (M = 294 g/mol; 102 mmol) were melted (melting point 88°C) and treated with 8,5 g 1,5-pentanediol (M = 104,06 g/mol; 82 mmol = 0,8 eq.) and 1,0 g dibutyl tin laureate (DBTL) and heated to 140°C for 2 h. After 150 minutes of heating, and amount of 5 g of a colourless liquid had been distilled off. Theoretical yield of ethanol: 7,5 g ethanol (M = 46 g/mol; 163 mmol). A dark oil remained: 32,8 g.

1H-NMR (400 MHz, CDCl3): 1.20 - 1.98 (m, 30H, CH2 and CH3), 3,35 - 4,40 (m, 35H, CH2, OCH3), 6.20 - 6.40 (mbr, 5H, OH), 6.80 - 7.60 (m, 20H, aromatic and olefinic H).

### Example 5: Sulphited Polyester (Sulphited polyester of intermediate 5)

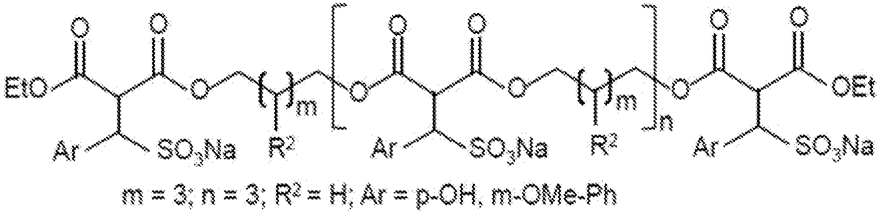

In a 250 mL 1-neck flask 30 g Intermediate 5 (M = 1518 g/mol; 19,7 mmol) were suspended in 50 mL warm water: pH = 7. The suspension was treated with 1,68 g NaHCO₃ (M = 84 g/mol, 20 mmol). pH = 7,7. 9,03 g Sodium metabisulfite (Na₂S₂O₅, M = 190,11 g/ mol, 47,5 mmol) were added and the suspension was warmed to 80°C for 4 h and should turn into a solution after some time: pH = 8. 87 g of a brown turbid solution (~ 42% solids measured). A sample of 1 g was acidified with 10% sulphuric acid until pH 3-4. A solution remained. No precipitate was observed, proving complete water solubility.

1H-NMR (400 MHz, D2O): 0.75 ppm, (t, J = 7 Hz, 6H, CH3), 0.80 - 1.61 (m, 24H, CH2), 3.40 - 4.13 (m, 35H, OCH2, OCH3), 4.15 - 4.25 (m, 5H, CH-C=O), 4.51 - 4.62 (m, 5H, benzylic-H), 6.75 - 6.81 (m, 10H, 5-H, 6-H), 6.88 - 6.97 (m, 5H, 2-H).

### Intermediate 6: Polyester resulting from esterification of intermediate 4 with 0,8 eq. 1,5-pentandiol (Pentameric ester of intermediate 4 with 1,5-pentandiol)

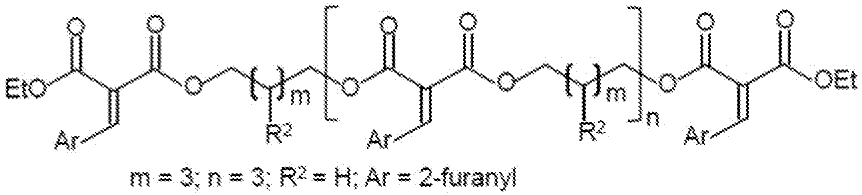

In a 100 mL 1-neck flask with mechanical stirrer and distillation apparatus 30 g intermediate 4 (M = 238,13 g/mol; 126 mmol) were treated with 10,5 g 1,5-pentanediol ( M = 104,06 g/mol; 101 mmol = 0,8 eq.) and 1,0 g dibutyl tin laureate (DBTL) and heated to 140°C for 2 h. After 2 h heating 7 g of a colourless liquid had been distilled off. Theoretical yield of ethanol: 9,3 g ethanol (M = 46 g/mol; 202 mmol). A dark oil remained: 32 g.

1H-NMR (400 MHz, CDCl3): 1.20 - 1.82 (m, 30H, CH2 and CH3), 3.35 - 3.80 (m, 4H, OCH2), 3.92 - 4.38 (m, 16H, OCH2), 6.42 - 6.50 (m, 5H, olefinic H), 6.72 - 6.78 (m, 5H, aromatic H), 7.38 - 7.41 (m, 5H, aromatic H), 7.43 - 7.46 (m, 5H, aromatic H).

### Example 6: Sulfited Polyester (Sulfited polyester of intermediate 6)

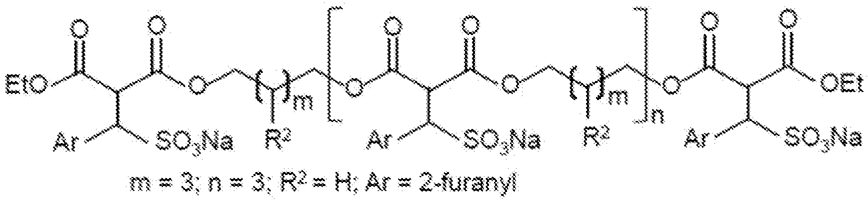

In a 250 mL 1-neck flask 30 g Intermediate 6 (M = 1238 g/mol; 24,2 mmol) were suspended in 50 mL warm water: pH = 7. The suspension was treated with 1,90 g NaHCO₃ (M = 84 g/mol, 23 mmol): pH = 7,9. 10,24 g Sodium metabisulfite (Na₂S₂O₅, M= 190,11 g/ mol, 53,9 mmol) were added and the suspension was warmed to 80°C for 8 h and should turn into a solution after some time: pH = 8. 87 g of a brown turbid solution (~ 36% solids measured). A sample of 1 g was acidified with 10% sulphuric acid until pH 3-4. A solution remained. No precipitate was observed proving complete water solubility.

1H-NMR (400 MHz, D2O): 0.95 - 1.65 (m, 30H, CH2 and CH3), 3.60 - 3,71 (m, 4H, OCH2), 3.78 - 4.24 (m, 21H, OCH2 and CH-C=O), 4.80 - 4.86 (m, 5H, benzylic-H), 6.34 - 6.38 (m, 10H, aromatic H), 7.38 - 7.41 (m, 5H, aromatic H).

### Example 7 GPC results

Molecular weights of the various samples was measured by GPC, using a Prominence-i LC2030 high pressure liquid chromatography system equipped with four Styragel columns (Waters) with tetrahydrofuran as a solvent, a flow rate of 1 mL/minute and a run-time of 30 minutes. The samples were dissolved in tetrahydrofuran with an injection volume of 50 µL. For detection a RI detector was used. Calibration was achieved with three polystyrene standards of defined molecular sizes. The results are collected in Table 1.

**Table 1: Gel permeation chromatography of intermediates 1 - 3**

| | Chemistry | Mn | Mw | Mw / Mn |
|---|---|---|---|---|
| Intermediate 1 | Ar = p-OH, m-OMe-Ph; R1 = Et | 373 | 382 | 1,026 |
| Intermediate 2 | Ar = p-OH, m-OMe-Ph; R1 = Et; R2 = H; m = 4; n = 0 | 493 | 662 | 1,342 |
| Intermediate 3 | Ar = p-OH, m-OMe-Ph; R1 = Et; R2 = H; m = 4; n = 2 | 544 | 782 | 1,436 |

As can be seen in table 1, the dimeric structure of Intermediate 2 was confirmed by a larger average molecular weight (Mw) and minimal molecular weight (Mn) of Intermediate 2 made from esterification of intermediate 1 with 1,6-hexandiol. Intermediate 3, being a tetrameric polyester of Intermediate 1 with 1,6-hexanediol, had a larger molecular weight than dimeric Intermediate 2. The polydispersity index is used as a measure of the broadness of a molecular weight distribution of a polymer, and is defined by the Mw/Mn ratio. The larger the polydispersity index, the broader the molecular weight and the low values obtained for Intermediates 2 and 3 demonstrate that the distribution of molecular weight is rather small and that Intermediates 2 and 3 have indeed on average a dimeric and tetrameric nature, respectively.

### Example 8 Re-tanning Results

The novel condensates of the present invention were tested as re-tanning agents on pelt that had been tanned with chromium sulphate. The re-tanning agents have the role to fill the collagen structures and impose characteristics like softness, grain tightness, and fastness properties. The resulting leathers were analysed and compared with leather re-tanned with syntans and vegetable tannins.

Re-tanning was carried out with wet blue, which is an intermediate in leather making derived from the treatment of pickled pelt with 7 % chromium sulfate: in a 3,5 L tanning drum 100 g of water and 100 g of bovine wet blue of southern German origin with 1,7 mm strength were treated with 1,2 g sodium formiate and 0,3 g sodium bicarbonate for 90 minutes. The resulting float had a pH of 4,5. 8 g re-tanning agent (referring to the solid content) were added and turning of the tanning drum was continued for 90 minutes. The float was discharged and the leather washed with 200 g water. Afterwards the leather was dried via hang drying over night without vacuum at room temperature.

The softness of leathers was quantified according to ISO 17235. Larger numbers describe bigger area increase indicating more softness of the leathers.

Fullness of re-tanned leathers was determined via haptics.

To determine the lightfastness the leathers were exposed to light in a sun tester for 72 h according to ISO 105-B02.

Leathers were re-tanned with examples 1, 2, 3, 5 and 6 and were compared to a leather re-tanned with a commercially available Basyntan MLB (a re-tanning agent obtainable from Stahl Europe BV; it is a syntan: condensation product of aromatic sulphonic acids) and the vegetable tanning agents Mimosa and Tara.

The results are collected in Table 2.

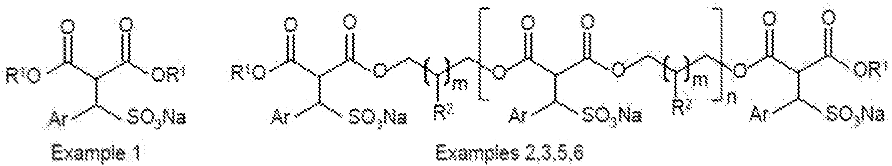

**Table 2: Softness, fullness, lightfastness of leather obtained from re-tanning of chromium tanned leather with examples 1, 2, 3, 5 and 6, Basyntan MLB, and commercially available vegetable tannins Mimosa and Tara. The analysis of the rest monomeric formaldehyde was determined from the pure product according to ISO 27587**

| Re-tanning agent | Chemistry | Softness ISO 17235 (1-5; larger number equal better softness) | Fullness haptic (1-5; larger number equal better fullness) | Lightfastness ISO 105-B02 (1-5; larger number indicate more lightfastness) | Formaldehyde analysis ISO 27587 |
|---|---|---|---|---|---|
| Example 1 | Ar = p-OH, m-OMe-Ph; R1 = Et | 2,3 | 2 | 4 | not detectable |
| Example 2 | Ar = p-OH, m-OMe-Ph; R1 = Et; R2 = H; m = 4; n = 0 | 2,4 | 3 | 4 | not detectable |
| Example 3 | Ar = p-OH, m-OMe-Ph; R1 = Et; R2 = H; m = 4; n = 2 | 2,5 | 3-4 | 3-4 | not detectable |
| Example 5 | Ar = p-OH, m-OMe-Ph; R1 = Et; R2 = H; m = 3; n = 3 | 2,2 | 2 | 3 | not detectable |
| Example 6 | Ar = 2-furanyl; R1 = Et; R2 = H; m = 3; n = 3 | 2,2 | 1-2 | 3 | not detectable |
| Basyntan MLB | (syntan) | 2,2 | 2 | 3 | 5 ppm |
| Vegetable Tannin | Mimosa | 2,3 | 1 | 1 | not detectable |
| Vegetable Tannin | Tara | 2,3 | 2 | 2-3 | not detectable |

As can be seen in Table 2, the softness and fullness of the resulting leathers increases from the sulphited monomeric Knoevenagel condensate (Example 1) to the dimeric polyester made with hexane diol (Example 2) and further to the tetrameric polyester made with hexane diol (Example 3) in parallel to the increase in molecular weight. All these three Examples showed better lightfastness compared to the leather made with the syntan or the vegetable tannins. In addition, the polyesters of Examples 2 and 3 exceeded both the Basyntan MLB and the vegetable tannins in softness and fullness.

Comparing the leathers re-tanned with polyester made with furfural (Example 6) with the leathers made with the corresponding polyester from vanillin (Example 5) the latter showed favourable properties concerning fullness. Leather properties of Example 5 was comparable to the ones achieved with Basyntan MLB.

Since syntans are made from formaldehyde and can release formaldehyde, a rest monomer analysis is commonly undertaken. The syntan Basyntan MLB contained 5 ppm free formaldehyde, as was analysed via UNI EN 27587, whereas formaldehyde could not be detected in the vegetable tanning agents and the Examples 1, 2, 3, 5 and 6.

The leather re-tanned with Examples 1, 2, 3, 5 and 6 show clearly better lightfastness properties than the leather re-tanned with vegetable tanning agents Tara and Mimosa, and similar lightfastness properties as measured for the leather re-tanned with syntan Basyntan MLB.

## Claims

1. Process for preparing novel compounds comprising the steps of
(i) condensation of malonic esters with aromatic aldehydes;
(ii) optionally, transesterification of the condensates obtained in step i) with polyol and
(iii) sulphitation of the product obtained in step i) or of the transesterified condensate obtained in step ii).

2. Process according to claim 1, wherein the aromatic aldehyde comprises a renewable aromatic aldehyde.

3. Process according to claim 2, wherein the aromatic aldehyde is vanillin, furfural, 5-hydroxymethyl furfural, or 2,5-diformylfuran.

4. Process according to any one of the preceding claims, wherein the malonic ester is represented by the formula R¹OC(O)-CH₂-C(O)OR², wherein R¹ and R² independently are selected from the group consisting of alkyl groups with preferably 1 to 10 carbon atoms, allyl groups, methallyl groups, alkenyl groups with preferably 1 to 10 carbon atoms and aryl groups.

5. Process according to claim 4, wherein the malonic ester is a dialkyl malonic ester or a diaryl malonic ester.

6. Process according to claim 5, wherein the malonic ester is diethyl malonic ester.

7. Process according to any one of the preceding claims, wherein the polyol is a monomeric diol, a monomeric triol, or a polymeric diol or a polymeric triol, or a combination thereof.

8. Process according to any one of the preceding claims wherein the sulphitation of step iii) is carried out by reacting with NaHCO₃ and sodium bisulfite or sodium meta bisulfite (Na₂S₂O₅) for several hours, preferably 1 to 5 hours, at elevated temperatures, preferably between 50°C and 120°C.

9. Product obtainable by the process as defined in any one of the preceding claims.

10. Use of product as defined in claim 9 as re-tanning agent in the leather process.

## Patentansprüche

1. Verfahren zur Herstellung neuartiger Verbindungen, umfassend die Schritte von
(i) Kondensation von Malonestern mit aromatischen Aldehyden;
(ii) optional Transveresterung der in Schritt i) erhaltenen Kondensate mit Polyol und
(iii) Sulfitierung des in Schritt i) erhaltenen Produkts oder des in Schritt ii) erhaltenen transveresterten Kondensats.

2. Verfahren nach Anspruch 1, wobei das aromatische Aldehyd ein nachwachsendes aromatisches Aldehyd umfasst.

3. Verfahren nach Anspruch 2, wobei das aromatische Aldehyd Vanillin, Furfural, 5-Hydroxymethylfurfural oder 2,5-Diformylfuran ist.

4. Verfahren nach einem der vorhergehenden Ansprüche, wobei der Malonester durch die Formel R¹OC(O)-CH₂-C(O)OR² dargestellt ist, wobei R¹ und R² unabhängig ausgewählt aus der Gruppe bestehend aus Alkylgruppen mit vorzugsweise 1 bis 10 Kohlenstoffatomen, Allylgruppen, Methallylgruppen, Alkenylgruppen mit vorzugsweise 1 bis 10 Kohlenstoffatomen und Arylgruppen.

5. Verfahren nach Anspruch 4, wobei der Malonester ein Malondialkylester oder ein Malondiarylester ist.

6. Verfahren nach Anspruch 5, wobei der Malonester Malondiethylester ist.

7. Verfahren nach einem der vorhergehenden Ansprüche, wobei das Polyol ein monomeres Diol, ein monomeres Triol oder ein polymeres Diol oder ein polymeres Triol oder eine Kombination davon ist.

8. Verfahren nach einem der vorhergehenden Ansprüche, wobei die Sulfitierung von Schritt iii) durch Reagieren mit NaHCO₃ und Natriumbisulfit oder Natriummetabisulfit (Na₂S₂O₅) für mehrere Stunden, vorzugsweise 1 bis 5 Stunden, bei erhöhten Temperaturen, vorzugsweise zwischen 50 °C und 120 °C, durchgeführt wird.

9. Produkt, erhältlich durch das in einem der vorhergehenden Ansprüche definierte Verfahren .

10. Verwendung eines wie in Anspruch 9 definierten Produkts als Nachgerbstoff im Lederverfahren.

## Revendications

1. Un procédé de préparation de composés nouveaux comprenant les étapes de
(i) condensation d'esters maloniques avec des aldéhydes aromatiques ;
(ii) éventuellement, transestérification des condensats obtenus à l'étape i) avec du polyol et
(iii) sulfitation du produit obtenu à l'étape i) ou du condensat transestérifié obtenu à l'étape ii).

2. Le procédé selon la revendication 1, dans lequel l'aldéhyde aromatique comprend un aldéhyde aromatique renouvelable.

3. Le procédé selon la revendication 2, dans lequel l'aldéhyde aromatique est la vanilline, le furfural, le 5-hydroxyméthyl furfural ou le 2,5-diformylfurane.

4. Le procédé selon l'une quelconque des revendications précédentes, dans lequel l'ester malonique est représenté par la formule R¹OC(O)-CH₂-C(O)OR² dans laquelle R¹ et R² sont, indépendamment l'un de l'autre, choisis dans le groupe constitué par les groupes alkyles comprenant de préférence 1 à 10 atomes de carbone, les groupes allyles, les groupes méthallyles, les groupes alcényles ayant de préférence 1 à 10 atomes de carbone et les groupes aryles.

5. Le procédé selon la revendication 4, dans lequel l'ester malonique est un ester dialkylique de l'acide malonique ou un ester diarylique de l'acide malonique.

6. Le procédé selon la revendication 5, dans lequel l'ester malonique est un ester diéthylique de l'acide malonique.

7. Le procédé selon l'une quelconque des revendications précédentes, dans lequel le polyol est un diol monomère, un triol monomère, ou un diol polymère ou un triol polymère, ou une combinaison de leurs combinaisons.

8. Le procédé selon l'une quelconque des revendications précédentes dans lequel la sulfitation de l'étape iii) est réalisée par réaction avec NaHCO₃ et du bisulfite de sodium ou du métabisulfite de sodium (Na₂S₂0₅) pendant plusieurs heures, de préférence 1 à 5 heures, à des températures élevées, de préférence entre 50°C et 120°C.

9. Un produit susceptible d'être obtenu par le procédé tel que défini dans l'une quelconque des revendications précédentes.

10. Utilisation du produit tel que défini dans la revendication 9 comme agent de retannage dans le traitement du cuir.
